# EUROPEAN PATENT APPLICATION

(11) **EP 2 862 449 A1**
(43) Date of publication of application: **22.04.2015**
(21) Application number: 13189399.2
(22) Date of filing: 18.10.2013
(51) Int. Cl.: A23G 1/00, A23G 1/18, A23G 1/40

(54) **Method and use of an apparatus for continuous tempering of chocolate mass comprising crystals**

(71) Applicant: Bühler AG, 9240 Uzwil (CH)
(72) Inventor: Braun, Peter, 8280 Kreuzlingen (CH); Paggios, Konstantinos, 8280 Kreuzlingen (CH)
(74) Representative: Hepp Wenger Ryffel AG

(57) **Abstract**

The invention relates to a method for continuous tempering of a crystal-containing and fat-containing chocolate mass that can be further crystallised. The method comprises the steps of: heating or maintaining the chocolate mass at a temperature at which it is liquid and pumpable; dividing the chocolate mass into a first stream of mass and a second stream of mass; cooling the chocolate mass of the first stream, so that further crystals are created in the first stream of mass; maintaining the second stream of mass at conditions that essentially allow for the initial overall crystal content to be maintained; re-combining the first stream of mass and the second stream of mass into one stream of mass. The invention further relates to a use of an apparatus (1) for continuous tempering of a crystal-containing and fat-containing chocolate mass that can be further crystallised.

## Description

The present invention concerns a method as well as the use of an apparatus for continuous tempering of a crystal-containing and fat-containing chocolate mass that can be further crystallised and which has been heated to a liquid and pumpable state.

Generally, the chocolate mass that is continuously tempered by the apparatus which is used according to the invention encompasses all types of already crystal-comprising suspensions of non-fat particles such as sugar, milk powders and cocoa solids mixed up with a liquid fat constituent, which suspensions are capable of further crystallizing. When it comes to the most widely used chocolate mass types, the fat constituent comprises genuine cocoa butter typically in a content of up to approximately 35 %. However, the fat phase may also comprise substitutes as well. A small content of up to 2 - 3 % of genuine cocoa butter may still be left in the recipe. Substitutes may be in the form of other types of fat-containing oils such as palm-kernel oil. Chocolate types having the cocoa butter been replaced by other fats are often named commercially as compound chocolate, especially when the cocoa butter has been replaced completely by palm-kernel oil. Mass made of up to 100 % cocoa butter may however also be continuously tempered. It is used later on as constituent in the production of different chocolate mass recipes.

For the continuous tempering to be performed, it is decisive that whether the fat phase constitutes of genuine cocoa butter or substitutes, the fat phase must be capable of crystallizing into stable fat crystal types when the mass solidifies, such as the β_{V}-crystals developing in genuine cocoa butter. Only then, eatable chocolate articles with good taste, crisp break and shiny appearance are created. The solidified chocolate articles will also achieve the longest possible shelf life and the best resistance against bloom, as instable fat crystals are diminished. If there is a content of in-stable fat crystals left in the mass, they will give rise to shorter shelf-life as the articles will bloom more quickly as when in-stable crystals are not present.

Optimal is then, when the type of fat crystals are stable β_{V}-crystals only. The content thereof in the ready tempered chocolate mass shall be at a desired content - for example of 1.0 % for a specific production. Only then the manufacturer can rely on that the quality of his chocolate products are always the same.

Before the chocolate mass is supplied to perform the actual tempering process by running continuously through the tempering apparatus, the mass is heated to around 40 - 50 °C in a premature step. Then essentially all the fat crystals in the chocolate mass are melted. The premature step is typically arranged distant to the tempering apparatus as the mass is heated in a storage tank. However, a heating step could also be arranged in the tempering apparatus in front of the cooling stage.

By the prior art tempering process the chocolate mass is being cooled to around 29-34°C in the cooling stage, so that fat crystals are very close to be created. Thereafter the mass passes through the crystallisation stage in which the temperature of the mass is typically lowered to 26 - 30 °C. The mass and the heat-exchanging surfaces of the crystallisation stage are so cold that fat crystals are created in the mass. The cooling water temperature is generally set to 10 - 14 °C by the tempering apparatus at the market today. The approximate temperature of the heat-exchanging surfaces of the crystallisation stage is advised to be below 18 °C, so that fat crystal creation ("Impfung") is performed at the cooling surfaces and not in the mass. Thereafter, the mass is conditioned and the crystals are mixed out through the mass. Conditioning means that creation and development of new fat crystals in the mass proceeds further. The temperature is also raised by 0.5 - 2.0 °C in the conditioning and mixing stage. The purpose is to re-melt as many as possible of the in-stable fat crystals, which unavoidably are created at the cold surfaces of the fat crystallisation stage. Desirable is to preserve a content of stable β_{V}-crystals only, by trying to melt up the in-stable crystals, which melt at lower temperatures than the stable β_{V}-crystals. The stable β_{V}-crystals are preserved in the mass in an amount of typically 0.01 % - 5 %, preferably in an amount of 0.1 % - 2 %.

Apparatuses for performing the above continuous tempering methods dominate the market since many years.

A given size of a tempering machine at the market has a fixed length and consequently fixed areas for cooling, crystallisation and reheating.

It has been observed that the maximum capacity measured in kilograms per hour of tempered mass of a given tempering machine of the ones at the market might be lowered when recipes with a high fat content are tempered. The maximum capacity is achieved when tempering dark chocolate having a fat content between 20 and 34 %. In comparison herewith the capacity is typically lowered around 20 % when milk chocolate, compound chocolate, nougat or other mass with a fat content between 30 % and 40 % is tempered.

When high fat recipes having fat content between 40 % and 100 % are tempered, the maximum capacity is lowered up to 50 %.

Energy consumption is sometimes considered disadvantageous, firstly for cooling down the total mass and secondly for reheating the mass. Further energy is required for the chocolate pumps and the gear motors of the tempering machines.

EP 1 616 487 A1 discloses a tempering apparatus by which already tempered mass is recirculated to the mixing or conditioning stage or to the crystallisation stage for upgrading the concentration of fat crystals in the mass. However the crystal content may be difficult to control exactly to a desired level.

WO 00/72695 A1 discloses a method and an apparatus by which a seed suspension is prepared by use of a high shear crystalliser, with or without the addition of crystal powder. The seed suspension is subsequently mixed in a content of 0.01 % - 0.2 % with a main stream of a fat crystal free mass such as for example a filling mass with a content of oils derived from nuts.

A challenge of some prior method and apparatus seems to be that the mixing has to be very intensive and thorough for the resultant mass to be sufficiently homogenous. Also the method is very time consuming as it takes at least 1.5 - 2 hours for the seed suspension to be created and the equipment is expensive. Furthermore, the added seed powder is expensive as it is based on cocoa butter-fat.

EP 2 210 500 A2 discloses a method for continuous tempering of a fat-containing, crystallisable chocolate mass, which has been heated, so that it is liquid, pumpable and free from crystals, wherein the mass is divided into a first stream of mass and a second stream of mass. The mass of the first stream is cooled so that crystals are created in this first stream of mass, while the mass of the second stream remains still essentially free from crystals. The first stream and the second stream of mass are then mixed together into one final crystallised stream of mass. The apparatus is equipped with a branching means adapted for dividing the mass into a first and a second stream of mass are provided; and wherein cooling means adapted for cooling of the mass are provided, so that crystals are created in the first stream of mass while the second stream of mass remains essentially free from crystals; and wherein mixing means are provided, adapted for mixing the first stream of mass and the second stream of mass together into one final crystallised stream of mass.

EP 2 210 499 A2 discloses an apparatus for continuous tempering of chocolate mass comprising a cooling stage, a crystallisation stage and a mixing stage arranged as a tempering column, further comprising pump means for the chocolate mass, wherein a primary conduit for chocolate mass is arranged by-passing the stage for creating crystals.

EP 2 356 909 A2, claiming priority of the aforementioned EP 2 210 499 A2, is directed to kit assemblies of parts for modifying an apparatus for continuous tempering of chocolate mass.

EP 2 210 501 A2 discloses a method and apparatus for continuous tempering of a fat-containing, crystallisable chocolate mass, which has been heated, so that it is liquid, pumpable and free from crystals, wherein the mass is divided into a first stream of mass and a second stream of mass, the amount of the first stream of mass being smaller than the amount of the second stream of mass. The mass of the first stream is cooled so that crystals are created in this first stream during a period of more than 100 seconds, while the mass of the second stream remains still essentially free from crystals. The first stream and the second stream of mass are then mixed together into one final crystallised stream of mass.

EP 2 526 780 A2, which is a divisional application of the aforementioned EP 2 210 501 A2, is directed to the same embodiment of the apparatus as EP 2 526 779 A2 (cf. above).

EP 2 526 779 A2, which is a divisional application of the aforementioned EP 2 210 500 A2, is directed to the same embodiment of the apparatus as EP2 210 500 A2 (cf. above).

The latter prior art documents (i.e. EP 2 210 500 A2, EP 2 210 499 A2, EP 2 356 909 A2, EP 2 210 501 A2, EP 2 526 780 A2, EP 2 526 779 A2) only relate to fat-containing, crystallisable chocolate mass which is essentially free from crystals. This requires the absence of sugar in crystallised form for the invention of these prior art documents to work. The practical relevance of the disclosed methods is thus very limited, namely to either sugar-free chocolate (i.e. very dark, milk-free bitter chocolate which still is a niche product in most countries) or chocolate containing sugar only in amorphous form. While sugar in amorphous form is sometimes desired in order to provide a sugar skeleton in chocolate masses (cf. e.g. GB 1,000,159), amorphous sugar such as e.g. lactose is hygroscopic (contrary to crystallised lactose) and is highly critical in chocolate masses (such as in particular milk chocolate) in that it tends to re-crystallisation (cf. e.g. dmz 17/2011, p. 24-27 and dmz 18/2011, p. 22-25). Upon re-crystallisation, water associated with the amorphous sugar is liberated and significantly impairs the quality of the final product. Thus, crystallisable chocolate masses which are free from crystals are either niche products or suffer from severe drawbacks in that re-crystallisation of amorphous sugar hampers the quality of the final chocolate product.

It is thus an object of the invention to provide a method for tempering of chocolate masses that does contain crystals, in particular sugar crystals like lactose and/or saccharose.

According to the method of the present invention, the chocolate mass is divided into a first stream of mass and a second stream of mass. The first stream of mass is cooled, so that further crystals (namely fat crystals as outlined hereinbefore) are created in the first stream of mass. Moreover, the second stream of mass is maintained at conditions that essentially allow for the initial overall crystal content (in particular the content of fat crystals) to be maintained. Thereafter, the first stream of mass and the second stream of mass are re-combined into one stream of mass.

It has surprisingly been found that the methods according to any one of EP 2 210 500 A2, EP 2 210 499 A2, EP 2 356 909 A2, EP 2 210 501 A2, EP 2 526 780 A2, EP 2 526 779 A2 - contrary to what is taught in these prior art documents - does not only work for crystal-free chocolate masses (i.e. chocolate masses without any sugar or chocolate masses with essentially only sugar in amorphous form). Instead, it works well also with chocolate masses that in fact do contain (even substantial amounts of) crystals, in particular sugar crystals (such as e.g. saccharose or lactose). This was not readily expected, since the beneficial effect of e.g. amorphous sugar is known in the literature. It has however now turned out that any such beneficial effect of amorphous sugar is not of importance in the context of the tempering of chocolate masses.

Preferably, the temperature of the second stream of mass is kept 4 - 7 °C higher than the lowest achievable temperature of the first stream of mass, when it is being further crystallised (for fat crystals). Thereby, the second stream of mass is cooled to the lowest possible temperature without creating fat crystals. Consequently, any cooling is preferably avoided for creating fat crystals in the second stream of mass. The total amount of cooling energy required for tempering of the mass is then lower than by the prior tempering process. Quite surprisingly, this holds also true for masses comprising (even substantial amounts of) crystals, in particular sugar crystals such as lactose and/or saccharose.

In the first stream of mass, crystals may be created a surface exhibiting a temperature above 19 °C.

The first stream of mass is effectively cooled and crystallised. During the subsequent mixing of the first and the second stream of mass, the crystals are effectively and homogenously spread out in the final stream of mass.

The second stream of mass is preferably kept at a constant temperature until immediately before mixing. The temperature must be low enough for the fat crystals in the first stream not to be re-melted and high enough for undesirable fat crystallisation not to be performed before and during mixing. The temperature is typically between 29 and 35 °C, primarily 30 - 33 °C, however is dependent of the particular mass.

Hereby is provided a method which is especially energy saving in the context of tempering crystal-containing chocolate masses. The total energy requirements for providing such continuously tempered chocolate mass is lowered up to 70 % for common chocolate recipes such as dark chocolate, milk chocolate and nougat, even with crystallised sugar.

Important to notice is that the method according to the present invention avoids use of any additional substance, such as expensive seed materials of cocoa butter. Neither is already crystallised mass re-circulated for upgrading of the mass or achieving higher concentration of fat crystals in the mass.

A further advantage is that instable fat crystals can preferably only be created in the first stream of mass being crystallised. Then, a smaller amount of instable fat crystals are potentially created than by the prior art. Consequently, less energy is required for remelting the remaining instable fat crystals in the mass as compared with the prior art. But also the quality of the final mass is potentially better as the amount of instable fat crystals is potentially smaller.

The complete mass may be cooled before it is divided. Then it is not necessary to cool down the biggest second stream of mass further before the mixing of it with the first stream of mass. Decisive is, however, that the temperature of the second stream of mass is so low that the stable fat crystals created are not melted up again during the mixing. The second stream of mass may also be cooled separately, so that the cooling thereof is independent of the first stream of mass.

When the amount of the first stream of mass is between 5 % and 40 % of the amount of the final stream of mass, then is obtained the lowest possible energy consumption for performing the continuous tempering according to the invention. The small amount of crystallised mass, i.e. between 5 % and 40 %, is effectively spread out in the second stream of mass during the mixing therewith. The crystals in a short time such as 10 - 20 seconds give rise to accelerated crystallisation in the remaining un-crystallised mass. On basis of the very low energy requirement for cooling and crystallising the small amount of crystals in the first stream of mass, is obtained an *"initiating"* effect for the remaining part of the mass without the addition of further cooling energy.

When the mass to be continuously tempered is milk chocolate, compound chocolate, nougat or other chocolate with a fat content between 30 % and 40 %, the energy savings are especially great, even in the presence of crystal sugar. When tempering such crystal-containing milk chocolate, the savings are as high as up to 70 % in comparison with a traditional tempering apparatus.

The invention also relates to the use of an apparatus for continuous tempering of a crystal-containing and fat-containing chocolate mass, which can be further crystallised, and which has been heated, so that it is liquid, pumpable and free from crystals. In particular, the apparatus can be used for performing a method as described above.

According to the invention, an apparatus is used that comprises a branching means adapted for dividing the mass into a first stream of mass and a second stream of mass, cooling means adapted for cooling of the mass, so that fat crystals are created in the first stream of mass, and so that the second stream of mass is still being essentially free from fat crystals, and mixing means adapted for mixing the first stream of mass and the second stream of mass together into one stream of mass.

The apparatus configuration makes it possible to generate fat crystals only in a smaller part of the total mass. The necessary cooling energy is then lowered as well as the energy requirements for electric gear motor and chocolate pumps. Less cooling surfaces of the tempering apparatus are necessary than in some prior art machines for producing the same total amount of mass containing fat crystals. The total energy requirements for the complete apparatus is then also lowered in comparison with the prior art machines for producing the same amount of tempered mass. The inventive apparatus can then be produced smaller in size. A very high desirable quality with diminishing content of in-stable fat crystals is achievable without using any *"seed"* technique by which expensive cocoa butter has to be crystallised separately and added to the particular mass.

It is especially advantageous when the apparatus is adapted to divide between 5 % and 40 % of the total mass into the first stream of mass and the rest into the second stream of mass. Then, the appropriate size of cooling surfaces and cooling capacity in the fat crystallisation stage are much less than when 100 % of mass has to be crystallised. The apparatus may then be made especially small and the energy consumption is lowered severely for the apparatus, i.e. up to 70 %.

When the amount of the first stream of mass is between 10 % and 30 % of the amount of the final stream of mass, the highest possible capacity of mass is achieved for a fixed configuration of an apparatus. The energy savings are also among the greatest. The totally consumed energy for apparatus is measured to between 7.7 W/(kg·hour) and 9.2 W/(kg·hour) tempered dark chocolate mass or milk chocolate mass with sugar crystals. In comparison herewith, the totally consumed energy for prior art apparatuses was measured to 20 - 25 W/(kg·hour) at the same conditions. The maximum tempered amount was between 1400 kg and 1800 kg per hour.

All the equipment of the apparatus is well-known components. For example, the tempering unit, the tanks, and the mixers may be of known types commercially available at the market.

The invention is further described by referring to the drawings, in which
- figure 1 :: schematically discloses an apparatus configuration for carrying out the method according to the invention,
- figure 2 :: schematically discloses another configuration according to figure 1,
- figure 3 :: schematically discloses an apparatus according to the invention for carrying out the method of the invention,
- figure 4 :: another embodiment of figure 3,
- figure 5 :: discloses schematically in vertical section one embodiment of the inner chambers of the apparatus of figure 3 or 4,
- figure 6 :: discloses schematically another embodiment of the inner chambers according to figure 5,
- figure 7 :: discloses curves of mass temperatures,
- figure 8 :: discloses the apparatus according to the invention, seen from the side,
- figure 9 :: schematically discloses the apparatus of figure 8,
- figure 10 :: schematically discloses an example of the inside of the apparatus,
- figure 11 :: schematically discloses another example of the inside of the apparatus,
- figure 12 :: schematically discloses a further example of the inside of the apparatus,
- figure 13 :: discloses schematically the apparatus according to the invention in another configuration, by which the apparatus can re-circulate excess chocolate mass not being consumed, seen in perspective,
- figure 14 :: schematically discloses another embodiment of the apparatus of figure 9 by which a pump is arranged in the primary conduit,
- figure 15 :: schematically discloses a further embodiment of the apparatus of figure 9 by which a pump is arranged in another conduit,
- figure 16 :: schematically discloses yet a further embodiment of the apparatus of figure 9,
- figure 17 :: schematically discloses an embodiment by which the by-pass conduit is arranged in the central shaft of the apparatus,
- figure 18 :: schematically discloses another embodiment by which the by-pass conduit is arranged in the central shaft of the apparatus,
- figure 19 :: schematically discloses a further embodiment by which the by-pass conduit is arranged in the central shaft of the apparatus,
- figure 20 :: schematically discloses yet a further embodiment by which the by-pass conduit is arranged in the central shaft of the apparatus, and
- figure 21 :: schematically discloses the kit assembly according to the invention in a first embodiment,
- figure 22 :: schematically discloses the arrangement of the embodiment of figure 21 in an existing tempering column,
- figure 23 :: discloses in detail the embodiment of figure 21 and 22,
- figure 24 :: another embodiment of the inventive kit assembly,
- figures 25 and 26 :: in detail the disc-shaped elements of figure 24,
- figure 27 :: discloses a further embodiment adapted for a tempering column having ring-shaped openings around the shaft for chocolate flow,
- figure 28 :: discloses the embodiment of figure 27 in a further modified version,
- figure29 :: another embodiment of the inventive kit assembly having elements in the form of disc-shaped sheaves,
- figure 30 :: the arrangement of the embodiment of figure 29 in a tempering column,
- figures 31, 32 and 33 :: details of the embodiment disclosed in figure 29.

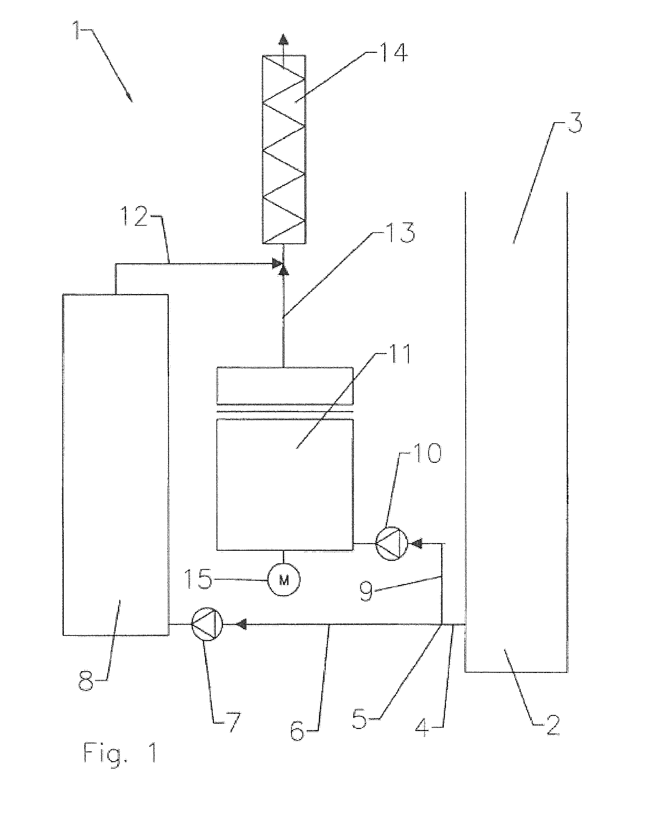

The apparatus 1 in figure 1 is configured for carrying out the method according to the invention. The apparatus 1 comprises a holding tank 2 for the chocolate mass 3 to be continuously tempered. A tube 4 connects the tank 2 with a branch 5. A tube 6 connects the branch 5 with a pump 7 connected to a heat exchanger or cooler 8. A further tube 9 connects the branch 5 with a further pump 10, which is connected to a cooling or tempering device 11. The cooler 8 is connected via a tube 12 with a static mixer 14. The tempering device 11 is connected with the static mixer 14 via a tube 13. The tempering device 11 could be of any usual known type available on the commercial market as long as it is capable of creating further crystals in the first stream of the mass. The tempering device 11 is usually equipped with internal stirring tools mounted on a longitudinal shaft driven by a motor 15.

The chocolate mass in the tank 2 is heated to a temperature interval of 40 - 50 °C. A first stream of mass is pumped via the pump 10 continuously through the tempering column 11 and via the tube 13 to the static mixer 14. A second stream of mass is pumped via the pump 7 through the cooler 8 and further via the tube 12 to the static mixer 14.

The amount of the first stream of mass is smaller than the amount of the second stream of mass. In the cooler 8, the second stream of mass is cooled from 40 - 50 °C to between 29 and 35 °C depending on the particular mass in question. It is important that the mass of the second stream achieves a temperature at which the initial overall crystal content (in particular the content of fat crystals) is maintained immediately before mixing with the first stream of mass. Then, further crystals (in particular fat crystals) created in the first stream of mass must be able to survive when the two streams are mixed in the mixer 14. This means that the temperature of the second stream of mass is typically 29 - 32 °C for milk chocolate, white chocolate and nougat chocolate and 31 - 33 °C for dark chocolate when the mass enters the mixer 14.

The first stream of mass is tempered continuously in the tempering apparatus 11 by well-known procedures. In the mixer 14, the smaller first stream of mass is mixed up into the larger second stream of mass and the crystals are mixed thoroughly and homogenously out into the final mass continuously delivered from the mixer 14.

At one example, the liquid mass in the tank 2 is dark chocolate with a fat content of 26 %. At one production run, 10 % of the amount of mass is pumped by the pump 10 through the tempering apparatus 11 and 90 % of the dark chocolate is pumped through the cooler 8. Approximately 35 % of the total energy requirement is saved in comparison with the energy required by a traditional tempering machine. Approximately 1000 kg/hour of well-tempered dark chocolate was delivered continuously by the mixer.

At another production run, milk chocolate with a fat content of 36 % is in the tank 2. Then, 25 % of the amount of milk chocolate is pumped by the pump 10 through the tempering apparatus 11 and 75 % of the milk chocolate is pumped through cooler 8. Astonishingly, approximately 55 % of the total energy requirement is saved in comparison with the energy required by a traditional tempering machine. Approximately 1400 kg/hour of well-tempered milk chocolate was delivered continuously by the mixer 14.

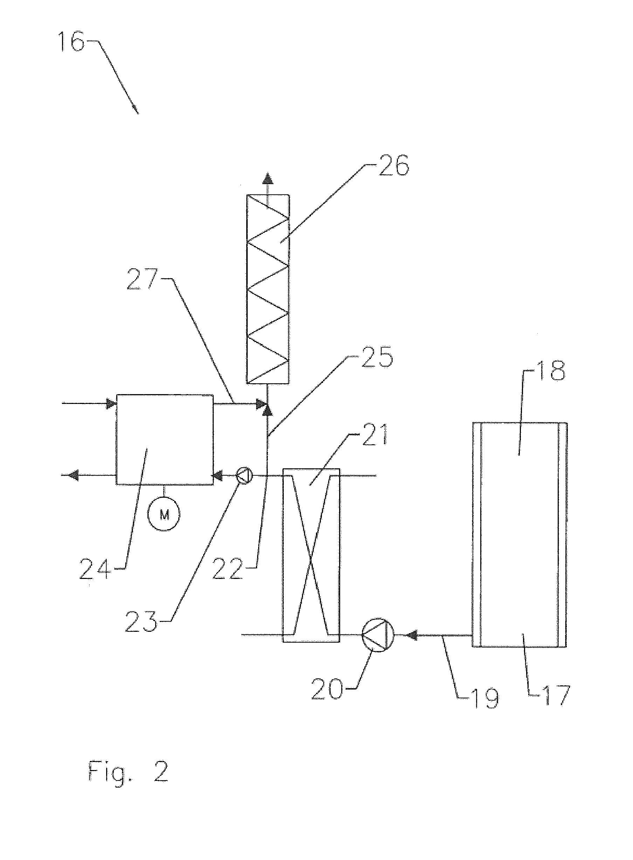

The apparatus 16 of figure 2 is also configured for carrying out the method of the invention. A tank 17 keeps the mass 18 at a constant temperature between 40 °C and 50 °C. A tube 19 connects the tank 17 with a pump 20. A cooler or heat exchanger 21 is connected with the pump 20 at the inlet and with a branch 22 at the outlet. The branch 22 is connected with a pump 23 for delivering the first stream of mass to a tempering apparatus or cooler 24, and is further connected with a tube 25 for delivering the second stream of mass directly to a static mixer 26. A tube 27 connects the tempering machine 24 with the mixer 26 for delivering tempered mass to the mixer.

The total mass is cooled in the cooler 21 close to a temperature where fat crystals can be created, however the mass is still free from fat crystals, whereas other crystals (such as sugar crystals) are still present. Via the pump 23, the first stream of mass is pumped into the tempering column 24 in an amount of typically between 10 % and 40 %. The first stream of mass is tempered in the apparatus 24, so that a content of between 0.5 % and 3 % of fat crystals is created. The normal tempering settings and procedures are followed as if the tempering machine was standing alone as by the prior art. Thereby, desirable tempering curves are obtained. In the mixer 26, the two streams of mass are mixed thoroughly together into a final mass. The energy savings are as by the previously described embodiment, typically a few percent better.

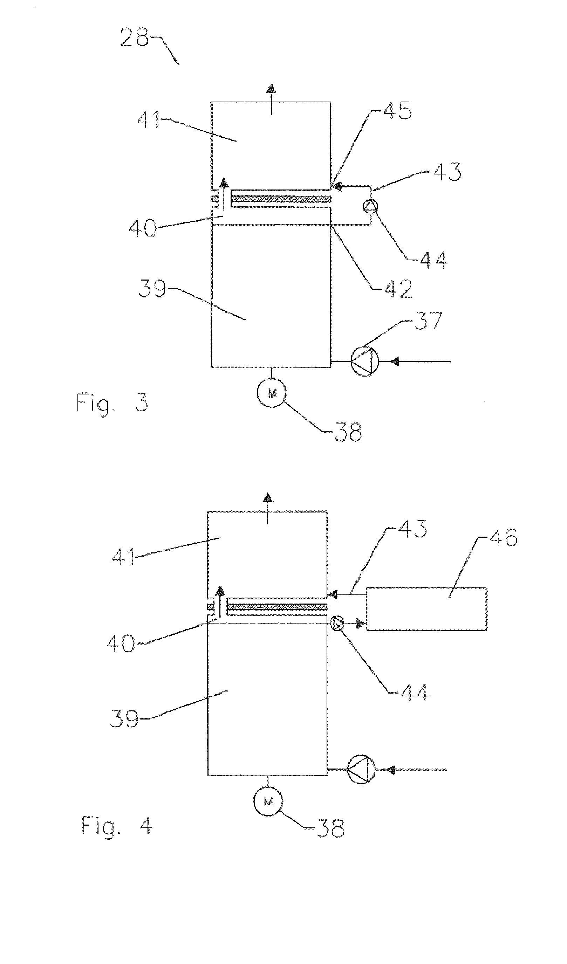

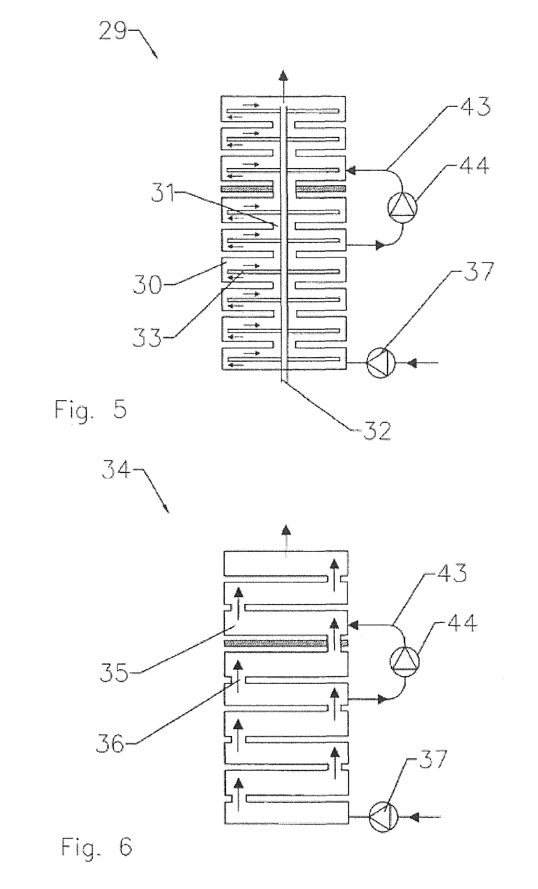

In figure 3, a tempering apparatus for carrying out the inventive method is disclosed. The apparatus 28 constitutes of a tempering column of well-known type such as the one disclosed in figure 5 or in figure 6.

The tempering column 29 schematically disclosed in figure 5 is built up by discs chambers 30 for the chocolate and intermediary chambers for the water, which are not disclosed as they are not part of the inventive idea. All the chocolate chambers 30 are interconnected by central ring-shaped openings 31. A central shaft 32 is connected with stirring tools 33 arranged in each chocolate chamber 30.

The tempering column 34 schematically disclosed in figure 6 is build up by discs chambers 35 for the chocolate and intermediary chambers for the water. All the chocolate chambers 35 are interconnected by openings 36 arranged at the periphery. A central shaft is connected with stirring tools arranged in each chamber as in figure 5.

Via a pump 37, the chocolate mass is pumped continuously through the column 28 in figure 3 and as disclosed in figure 5 or in figure 6 in more detail. A motor 38 turns the shaft 32 and the stirring tools 33, typically with 25 - 50 revolutions per minute.

The tempering apparatus 28 in figure 3 has a cooling section 39, a crystallisation section 40 and a mixing and conditioning section 41. Between the cooling section 39 and the crystallisation section 40, an inlet 42 to a conduit 43 with a pump 44 is arranged. An outlet 45 of the conduit 43 is connected with the mixing and conditioning section 41.

The mass is pumped from the non-disclosed tank having a temperature of 40 - 50 °C by the pump 37 into the cooling section 39 of the tempering column 28. In the cooling section 39, the temperature of the mass is lowered so much that it is close to the temperature at which fat crystals can be created, however it is still free from any fat crystals in the mass, whereas other crystals (such as sugar crystals) are still present. The pump 44 pumps the desired amount of the second stream of mass out of the tempering column 28 and into the conduit 43. From the by-passing conduit 43, the second stream of mass enters via the inlet 45 into the mixing and conditioning section 41, still being free from fat crystals, whereas other crystals (such as sugar crystals) are still present. The first stream of mass flow through the crystallisation section 40 at which further crystals (in particular fat crystals) are created in the mass. From there, the first stream of mass flows into the mixing and conditioning section 41 and mixes up with the second stream of mass, so that the crystals (in particular the fat crystals) are homogenously distributed out through the final mass.

At one production test with dark chocolate, a continuous amount of 1000 kg/hour is delivered from the apparatus 28. Approximately 90 % of the dark chocolate is by-passed in the conduit 43, meaning that this amount of chocolate is not being further crystallised in the crystallisation section 40. Well-tempered dark chocolate is delivered continuously from the apparatus. The tempering index is flat and sharp in the region of 4.7 - 5.3, which is extremely well in comparison with the results achievable for the prior known apparatus. The total energy consumption for the apparatus is measured, both in terms of cooling energy from cold water as well as the consumption of all electrical components and pumps. The result is that 40 % of the total energy consumption is saved in comparison with a prior tempering apparatus for delivering the same amount of 1000 kg/hour of well-tempered dark chocolate.

At another production test, well-tempered milk chocolate is continuously delivered in an amount of 1000 kg/hour. Approximately 75 % of the milk chocolate is by-passed in the conduit 43, so that this amount is not further crystallised in the crystallisation section 40. The tempering index is in the region of 4.5 - 5.4, which is impressive.

The total energy consumption for the apparatus was measured, both in terms of cooling energy from cold water as well as the consumption of all electrical components and pumps. The result is that 55 % of the total energy consumption is saved in comparison with a prior tempering apparatus for delivering the same amount of 1000 kg/hour of well-tempered milk chocolate. The total consumed energy amount was 35 kW/hour for continuously tempering 1000 kg/hour milk chocolate with the traditional tempering machine. With the machine used according to the invention, the total consumed energy amount was 10 kW/hour for continuously tempering the same mass and the same amount per hour.

Tests have shown that when the amount of the first stream of mass is between 10 % and 30 % of the amount of the final stream of mass, the highest possible capacity of mass is achieved for a fixed configuration of an apparatus. The energy savings are also among the greatest. The totally consumed energy for apparatus is measured to be between 7.7 W(kg·hour) and 9.2 W(kg·hour) tempered dark chocolate mass or milk chocolate mass. In comparison herewith, the totally consumed energy for prior art apparatuses was measured to 20 - 25 W(kg·hour) at the same conditions. The maximum tempered amount was between 1400 kg and 1800 kg per hour for a modified tempering column used according to the inventive solution. When laid out according to the prior art, the particular tempering column has a maximum capacity of tempering 1000 kg/hour of dark chocolate.

The result of the high savings in total energy consumption for the apparatus is astonishing and a great advantage for the producer, especially for factories which have many tempering machines.

The embodiment disclosed in figure 4 is identical to the embodiment 28 disclosed in figure 3, apart from a further cooler 46 arranged in the conduit 43. Hereby, a finer control with the temperature of the by-passed stream of mass before it enters into the mixing section 41 is obtained. This is an advantage when the mass type dictates very accurate temperature control in the region at which no fat crystals are created. The crystals of the first stream of mass survive and increase further crystallisation in the mixing section 41.

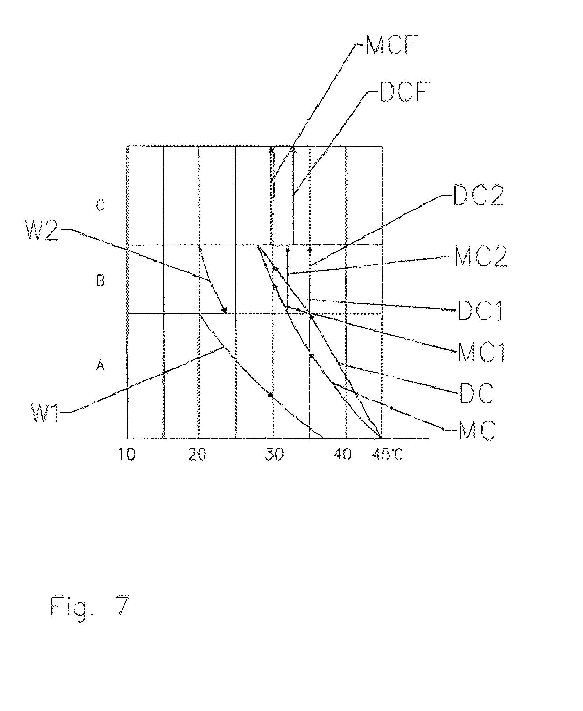

In figure 7, two examples of temperature curves for the chocolate mass passing through the apparatus disclosed in figure 2 or in figure 3 are disclosed.

In stage A, the total mass is cooled down, in stage B, the mass has been split into the first and the second stream, and in stage C, the mass has been mixed.

The first example is for a well-known type of milk chocolate. In the first stage A, the milk chocolate MC is cooled down from 45 °C and to 32 °C. The temperature W1 of the water in the cooling chambers then rises from 20 °C and to 37 °C as the water flows in the opposite direction of the chocolate. The mass is then split into 33 % of the first stream MC1 and 67 % of the second stream MC2. In stage B, the first stream of milk chocolate MC1 is cooled down to 28 °C during crystallisation in the tempering apparatus 24 of figure 2 or in the crystallisation section 40 of figure 3. The temperature W2 of the cooling water rises from 20 °C and to 23.5 °C in stage B as the water flows in the opposite direction of the chocolate. The temperature of the cooling surfaces of stage B, over whose surfaces the chocolate flows, is then approximately 1 °C higher than the temperature of the cooling water. The temperature of the second stream of mass MC2 is kept constant at 32 °C. In stage C, the two streams MC1 and MC2 are mixed and the temperature of the resulting stream MCF is 29.5 °C.

The second example is for a well-known type of dark chocolate. In the first stage A, the dark chocolate MD is cooled down from 45 °C and to 35 °C. The temperature W1 of the water in the cooling chambers then rises from 20 °C and to 37 °C as the water flows in the opposite direction of the chocolate. The mass is then split into 25 % of the first stream DC1 and 75 % of the second stream DC2. In stage B, the first stream of dark chocolate DC1 is cooled down to 28 °C during crystallisation in the tempering apparatus 24 of figure 2 or in the crystallisation section 40 of figure 3. The temperature W2 of the cooling water rises from 20 °C and to 23.5 °C in stage B as the water flows in the opposite direction of the chocolate. The temperature of the cooling surfaces of stage B, over whose surfaces the chocolate flows, is then approximately 1 °C higher than the temperature of the cooling water. The temperature of the second stream of mass DC2 is kept constant at 35 °C. In stage C, the two streams DC1 and DC2 are mixed and the temperature of the resulting stream DCF is 33 °C.

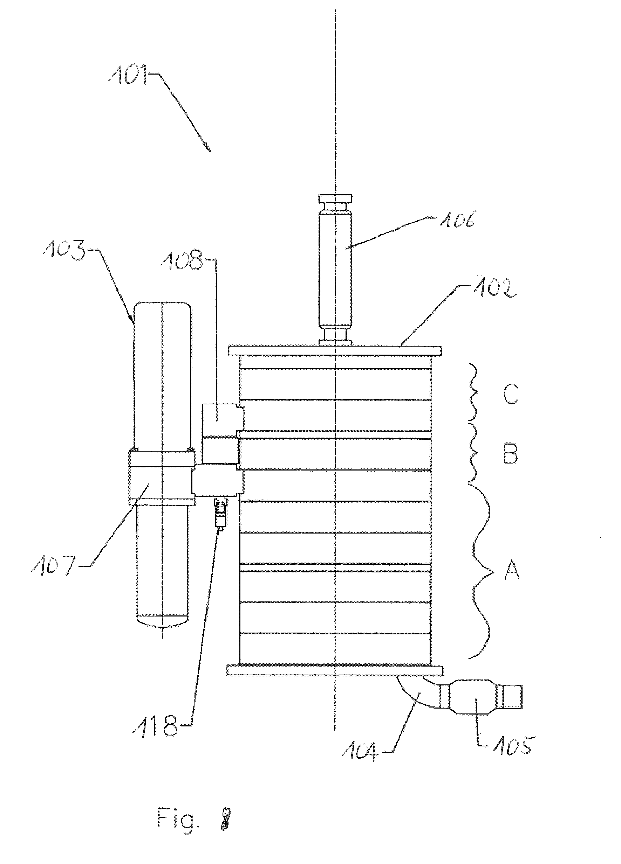

The apparatus 101 disclosed in figure 8 comprises a tempering column 102 for continuous tempering of chocolate mass. Externally on the column 102, there is arranged a device 103 for by-passing chocolate outside the column, an inlet 104 and a pump 105 for pumping chocolate mass into the column 102, and an outlet 106 for the ready tempered mass leaving the column. The column 102 is normally arranged in a steel frame or support, which is not disclosed, as it is not part of the invention.

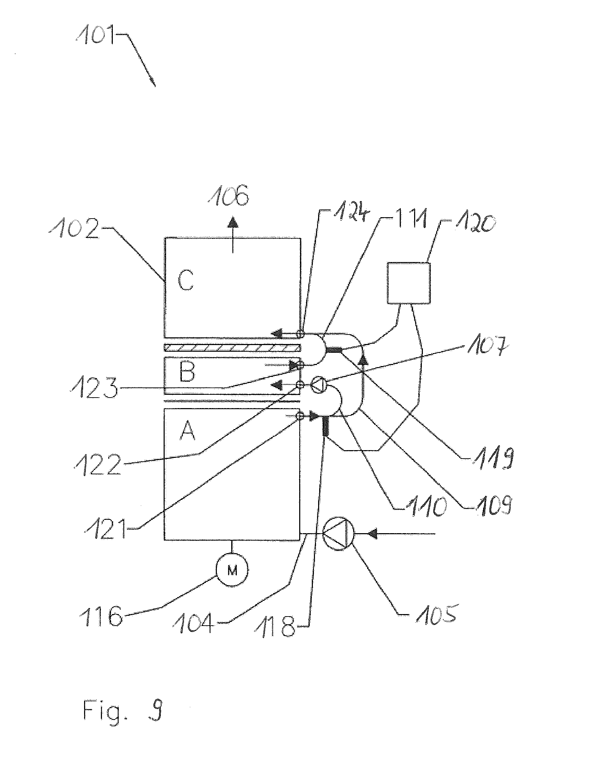

The column 102 comprises a cooling stage A, a crystallisation stage B and a conditioning and mixing stage C. The device 103 comprises a pump 107 as well as a block 108 with internal conduits. In figure 9, there is schematically disclosed the tempering column 102 as well as the inner conduits of the block 108 and the pump 107.

In the device 108, there is arranged a primary conduit 109 for by-passing the crystallisation stage B. A second conduit 110 is branched of from the primary conduit 109. A pump 107, such as a mono pump, is arranged for pumping the mass through the conduit 110 and into the crystallisation stage B. A third conduit 111 extends from the end of the crystallisation stage B and leads the mass therefrom and into the mixing stage C as the conduit 111 branches into the primary conduit 109.

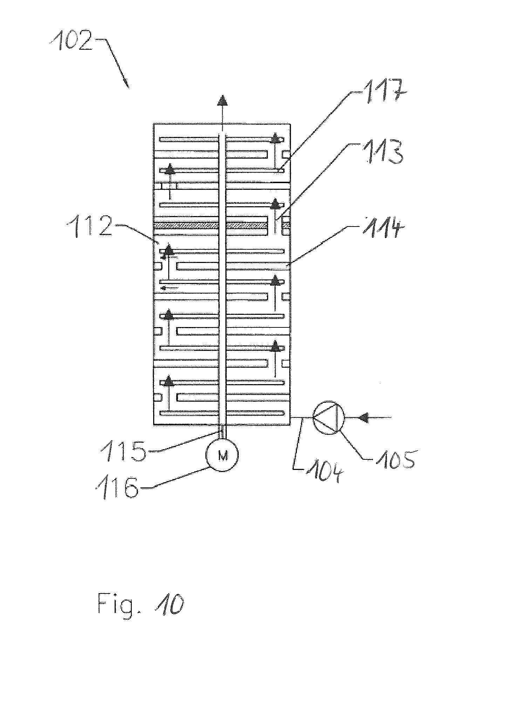

In figure 10 it is disclosed that the apparatus could have disc-shaped chocolate chambers 112 interconnected via chocolate channels 113 and intermediary disc-shaped water chambers 114. A central shaft 115 is connected with stirring tools 117 arranged in the chocolate chambers 112. A motor 116 rotates the shaft 115.

As disclosed in the embodiment of figure 9, the column 102 is barred against flow of mass internally between the cooling stage A and the crystallisation stage B, and between the crystallisation stage B and the mixing stage C. This is simply done by closing of inner channels 113 between the stages A, B, C. Then it is only possible for the mass to flow between the stages A and B, and between the stages B and C by flowing in the conduits 109, 110 and 111.

Temperature sensors 118, 119 for measurement of the mass temperature is arranged and wired to an electronic unit 120, such as a PLC control device. The electronic unit controls the cooling amounts of the non-disclosed water circuits at the cooling stages A and B in response to pre-set temperatures for the sensors. The temperature sensors 118, 119 are schematically disclosed in figure 9.

The particular column was taken out of the traditional set-up and equipped in accordance to the present invention with the device 103 comprising the pump 107 and the block 108. Openings 121, 122, 123 and 124 were made in the side of the column 102 into chocolate chambers 112 as schematically disclosed in figure 9. The opening 121 at the end of the cooling stage A is connected with the inlets of conduits 109 and 110. The outlet of conduit 110 is connected with the opening 122 at the beginning of the crystallisation stage B. The opening 123 at the end of the crystallisation stage B is connected with the inlet of the conduit 111. The opening 124 is connected with the outlets of conduits 109 and 111.

The chocolate mass is pumped by the action of the pump 105 from an external non-disclosed source such as a storage tank, in which the chocolate was heated to 40 - 50 °C. In the first stage A of column 102, the mass is cooled down to a temperature typically between 30 °C and 35 °C depending of the chocolate type. The temperature is pre-set at the sensor 118 and the appropriate cooling amount is regulated in the stage A, so that the pre-set temperature is achieved for the chocolate at the end of the stage A. The highest temperature is for dark chocolate, and the higher the fat-content is, the lower the set temperature is. This means, that the by-passed stream of mass flowing in the conduit 109 has not been cooled more than to the lowest possible temperature without creating crystals, in particular without creating fat crystals. For tests made with a type of dark chocolate, the temperature was set to 33 - 35 °C. For tests made with a milk chocolate; the temperature was set to 32 °C, and for tests made with nougat mass; the temperature was set to 30 °C. The temperatures are up to 5 °C higher than the temperatures at which all crystals, in particular all fat crystals, of the mass have formed by the prior art apparatus.

At the different tests performed, between 95 % and 65 % of mass were by-passed in the conduit 109. This means that between 5 % and 35 % of mass is pumped via the pump 107 and the conduit 110 into and through the crystallisation stage B. The mass is further crystallised in the stage B and leaves through the conduit 111. The desired end temperature is pre-set at the sensor 119 and is typically a few degrees lower than at the sensor 118. As the conduit 111 branches into the conduit 109, in which the major amount of mass is being by-passed, the further crystallised mass starts to mix up into the by-passed mass. After having entered into the mixing stage C, the crystals are mixed thoroughly out into the mass.

It means that the temperature of the by-passed stream of mass is approximately 4-5 °C higher than by the traditional tempering process, i.e. by which the complete mass is cooled down for crystallisation. Thereby, the cooling amount for creating crystals in the by-passed mass is superfluous. Consequently, the total amount of cooling energy required for tempering the mass is much lower than by the prior tempering apparatuses.

Several tests were performed with the apparatus 101.

The total energy consumption for a traditional set-up of the particular column tempering the same type of dark chocolate uses between 20 W(kg·hour) tempered chocolate and 25 W(kg·hour) tempered chocolate. The traditional set-up of the column in the AMC uses 20 W(kg·hour) tempered chocolate. Other types of tempering machines at the market uses up to 25 W(kg·hour) tempered chocolate when they are equipped with stirring tools in the form of sheaves.

Another series of tests with a generally used type of milk chocolate with a fat-content of 36 % was performed with the apparatus 101. Between 90 % and 67 % of the mass was by-passed outside the crystallisation stage B. Then between 10 % and 33 % was passed through the crystallisation stage B. The maximum output reached was between 1400 kg/hour and 1800 kg/hour well-tempered chocolate. The Energy consumption was between 7.04 W(kg·hour) and 8.23 W(kg·hour) tempered chocolate.

A further series of tests were made with a common type of nougat. The maximum output reached was between 1400 kg/hour and 1600 kg/hour well-tempered nougat. The crystallised stream was 25 % and the energy consumptions were between 9.0 and 10.0 W(kg·hour) tempered chocolate.

The results with nougat are especially astonishing, as nougat has always been very difficult to achieve in a well-tempered state without a content of instable fat crystals. The achieved quality of the nougat made with the inventive apparatus is impressive, which has been proved by taking out numerous tempering curves from samples. Test taken with DSC (Differential Scanning Calorimeter) proves that the samples contain β_{V}-crystals only.

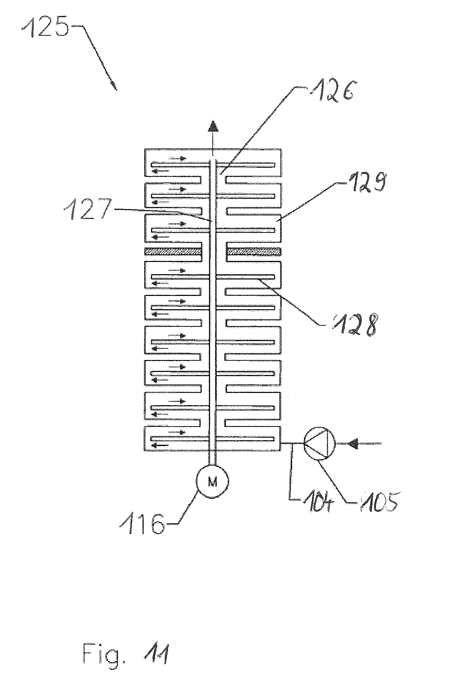

However, the column of apparatus 101 could have several different inner configurations as long as it is able to perform continuous tempering of crystal-containing and fat-containing chocolate mass. As disclosed in figure 11, the column 125 the chocolate channels can also be arranged as ring-shaped openings 126, through which a shaft 127 extends. When the openings 126 are ring-shaped, the stirring tools 128 are typically sheave-formed so that the chocolate can pass through at a further ring-shaped opening 129 at the periphery. An external pump 105 provides a pressure for the flow of chocolate through the chambers of the apparatus.

In figures 10 and 11, the flow-direction of the chocolate is disclosed from bottom to top. However it could also be from top to bottom of the columns, or it could even be horizontal as long as the by-passing conduit is arranged according to some embodiments of the invention.

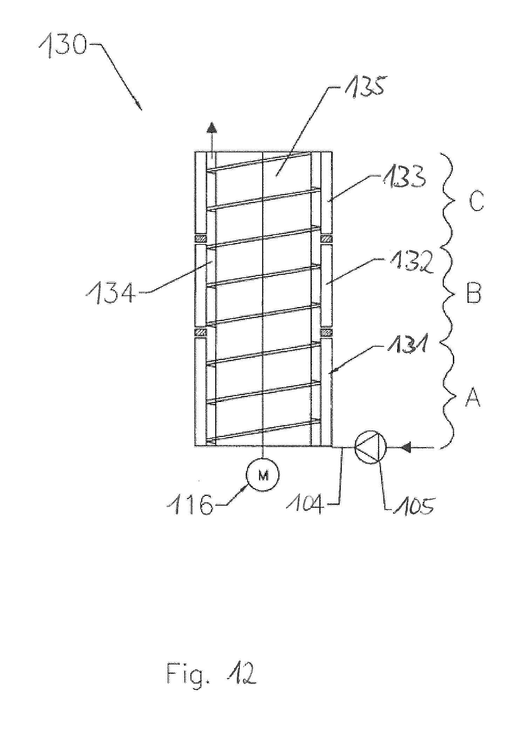

The apparatus could also be of a configuration such as shown in figure 12, by which the column 130 comprises ring-shaped water chambers 131, 132 and 133 at the periphery, surrounding an inner circular channel 134 for the chocolate mass. In the chocolate channel, there is arranged a rotating screw 135 extending all through the column. The water chamber 131 is then arranged in the cooling stage A, the water chamber 132 is arranged in the crystallisation stage B and the water chamber 133 is arranged in the conditioning and mixing stage C.

The outer periphery of the screw 135 is typically only a few millimetres from the inner surface wall of the surrounding water chambers. The screw is acting as pump means for the transportation of the chocolate through the column 130.

The apparatus could also be a so-called high shear tempering apparatus. The configuration corresponds to that disclosed in figure 12 when the screw is exchanged with a rotating shaft with two or more longitudinally extending knife means. The knives have surfaces that slide over the inner periphery of the chocolate channel during rotation of the shaft.

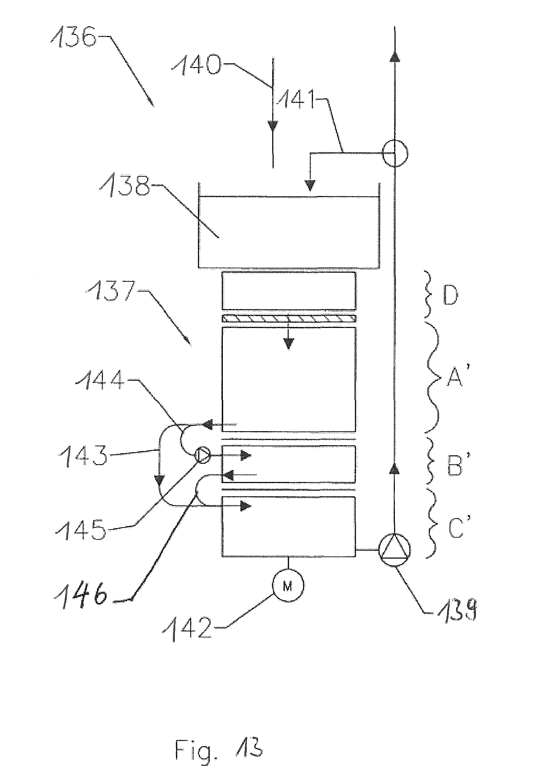

In figure 13, there is disclosed another tempering apparatus 136 according to some embodiments of the invention. The apparatus 136 is of the type which is capable of recirculating excess chocolate, when not the complete amount of continuously tempered chocolate is consumed. The apparatus comprises a column 137 as well as an open vessel 138 on top of the column 137. The mass is continuously tempered in downwards direction through the cooling stage A', the crystallisation stage B' and the crystallisation stage C'. In front of the cooling stage A', there is arranged a de-crystallisation stage D, which heats up the chocolate to 40 - 50 °C, so that it is free from fat crystals.

The crystallised and ready tempered chocolate leaves the column 137 by pressure from the pump 139. Excess mass is returned from the production via the conduit 140. Too much chocolate being produced by the column 137 simply returns directly to the vessel 138 via the conduit 141. A motor 142 turns the shaft with the inner stirring tools, not being disclosed. The major conduit 143 is by-passing the preset amount of mass, typically between 5 % and 35 % of the total amount of mass. The second conduit 144 comprises a pump 145, which regulates the desired amount to be further crystallised in the stage B'. Through the third conduit 146, the crystallised mass flow to be mixed thoroughly with the by-passed mass in the conditioning and mixing stage C'.

The inside of the tempering apparatus disclosed in figure 13 could of course have many different configurations such as the ones disclosed in figures 10, 11 and 12, as long as the principle of the by-pass of some embodiments is possible.

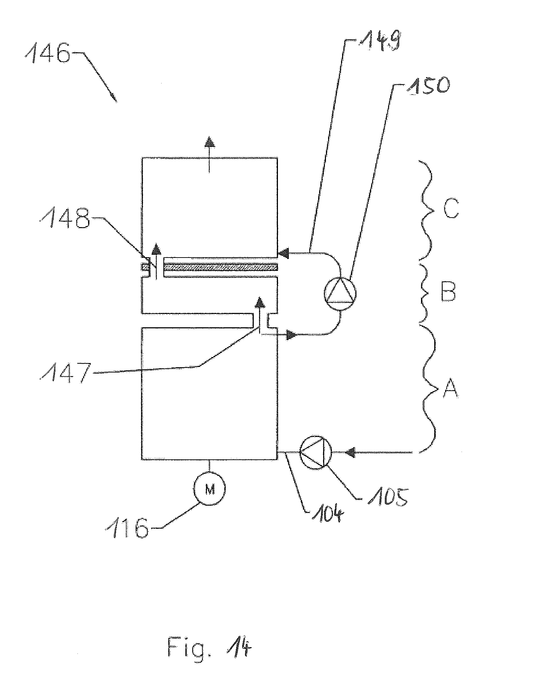

In figure 14, there is disclosed a further embodiment mounted on a typical standard column 146 available in the prior art. An opening 147 is arranged for the chocolate flow from the cooling stage A and to the crystallisation stage B, and an opening is arranged for the chocolate flow from the crystallisation stage B and to the mixing stage C. A conduit 149 is arranged, for example in a tube outside the column. A pump 150 is arranged in the conduit for pumping the by-passed amount of chocolate outside the crystallisation stage B.

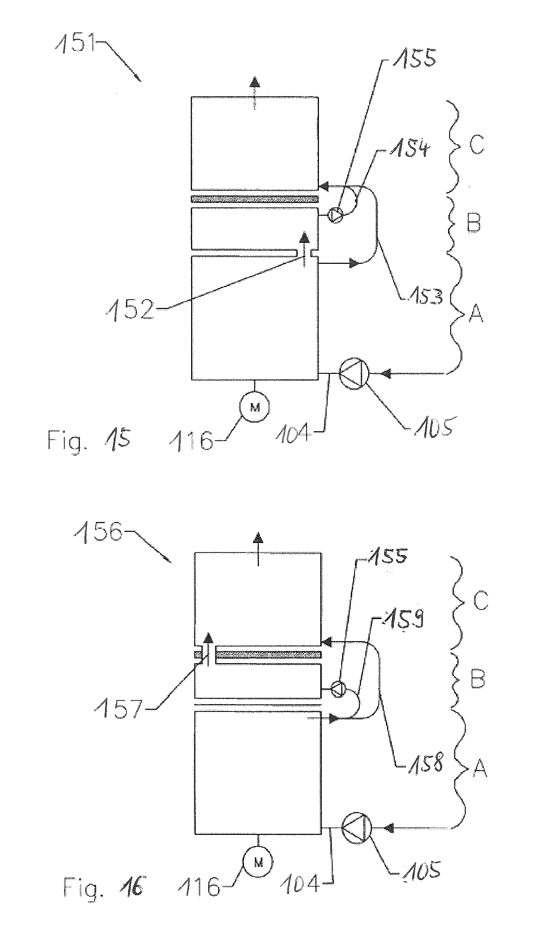

In figure 15, there is disclosed another embodiment 51, at which only one chocolate opening 152 is arranged, i.e. for flow of chocolate from the cooling stage A and to the crystallisation stage B. A primary conduit 153 is arranged for by-passing chocolate from the crystallisation stage A and to the mixing stage C. A second conduit 154 and a pump 155 are arranged connecting the end of the crystallisation stage B with the beginning of the mixing stage C. The chocolate is divided at the end of the cooling stage A into a stream that, via the general pressure from the pump 105, is by-passed the crystallisation stage B and flows directly to the mixing stage C. A minor part of the chocolate amount in the cooling stage A, such as between 5 % and 35 %, flow through the opening 152 and is further crystallised in the stage B, where after it is pumped by the pump 155 through the conduit 154 and into mixing with the remaining mass in the stage C.

In figure 16, there is disclosed an embodiment by which the apparatus 156 is closed between the cooling stage A and the crystallisation stage B. An opening 157 for through flow of chocolate is arranged between the crystallisation stage B and the mixing stage C. A conduit 158 is arranged for by-passing chocolate from the cooling stage A and to the mixing stage C. A pump 155 and a conduit 159 are arranged for pumping the desired amount of chocolate through the crystallisation stage B. Then, a very small amount of energy is applied when for example between 5 % and 35 % of chocolate mass is further crystallised.

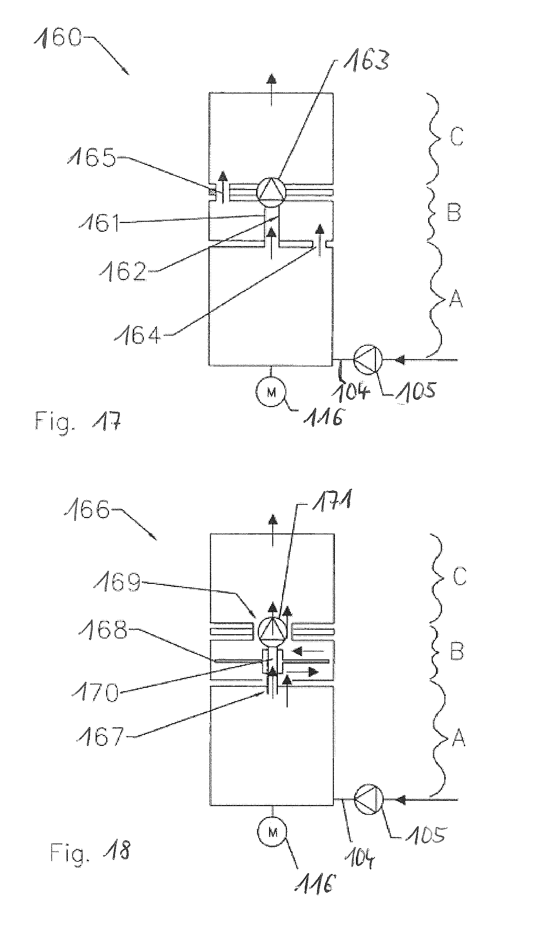

In figures 17, 18, 19 and 20, there are disclosed different embodiments, by which the conduits for by-passing chocolate mass are arranged inside the tempering columns. All embodiments comprise a cooling stage A, a crystallisation stage B and a mixing stage C.

In figure 17, the column 160 comprises a hollow shaft 161 with a conduit 162 and a pump 163 for by-passing chocolate mass. The mass enters the column 160 at the inlet 104. The complete mass is cooled in the cooling stage A. A predetermined amount of mass, for example between 95 % and 65 %, is by-passed the crystallisation stage B by being pumped directly to the mixing stage C. The shaft 161 could comprise non-disclosed openings in the side, through which the mass enters into the conduit 162 and via the pump 163 is pumped into the mixing stage C. The remaining mass enters via the opening 164 into the crystallisation stage B. In stage B, between 5 % and 40 % of the mass is further crystallised, after which it flows through the opening 165 and into the mixing stage C where the mixing with the remaining mass is performed. The stirring tools arranged on the shaft could have many different configurations, for which reason they are not disclosed. They could for example have the shape of wings or sheaves.

In figure 18, the column 166 is of the type where the shaft 167 comprise stirring tools in the form of sheaves 168. The chocolate then passes on from chocolate chamber to chocolate chamber via ring-shaped openings 169. A conduit 170 and a pump 171 are arranged for pumping the by-passed chocolate mass directly from the cooling stage A, through the conduit 170 arranged in the shaft 67 and to the mixing stage C.

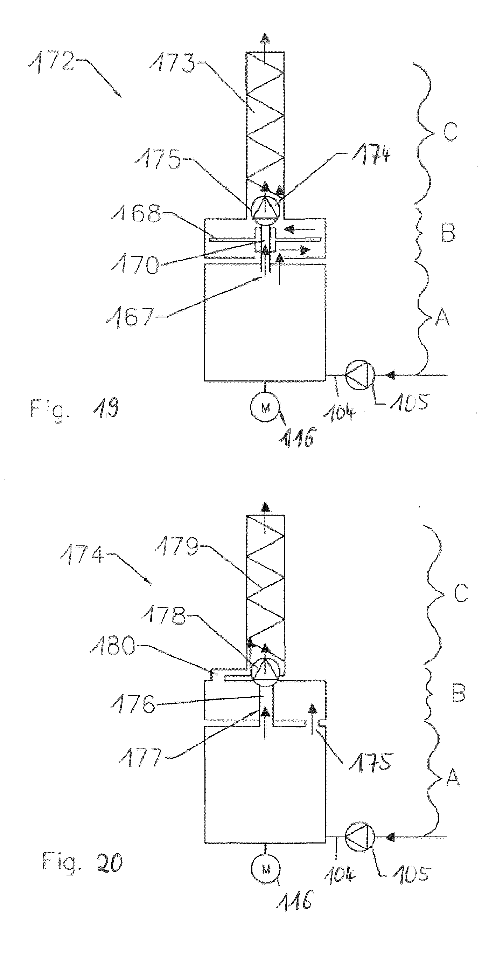

In figure 19, the column 172 comprises the shaft 167 having stirring tools in the form of sheaves 168. The chocolate then passes on from chocolate chamber to chocolate chamber via ring-shaped openings 169. The mixing stage C is however arranged in a separate mixer part 173, which is built on to the crystallisation stage B. The mixer part 173 could be a highly effective static mixer. A pump 174 is arranged for pumping the by-passed amount through a channel 170 in the shaft 167 and directly from the cooling stage A and to the mixer part 173. The remaining amount of mass is further crystallised in stage B and flow through the ring-shaped opening 175 into the mixer 173.

In figure 20, there is disclosed a variation of the embodiment of figure 19. The column 174 comprises openings 175 for the chocolate arranged at the periphery. Mass is by-passed through the conduit 176 in the shaft 177 and is pumped via the pump 178 into the mixer 179. The amount of mass that is flowing into the crystallisation stage via the opening 175 leaves the stage B through the opening 180 to the mixer part 179 where the intensive mixing of the two amounts of mass is continuously performed.

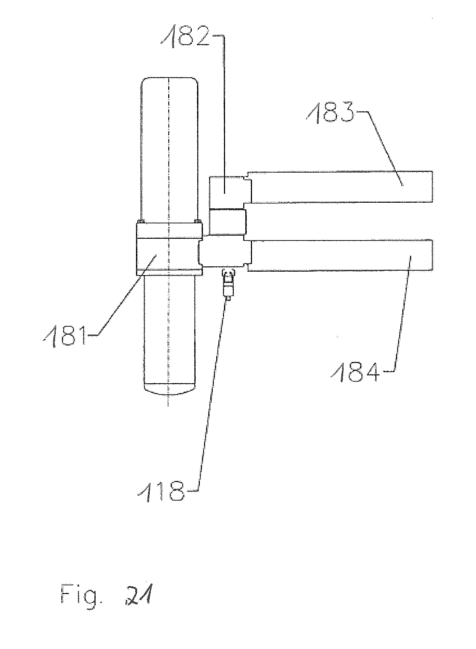

A kit assembly is disclosed in figure 21. It comprises a pump 181, a device part 182 with internal conduits as well as a first disc-shaped element 183 and a second disc-shaped element 184.

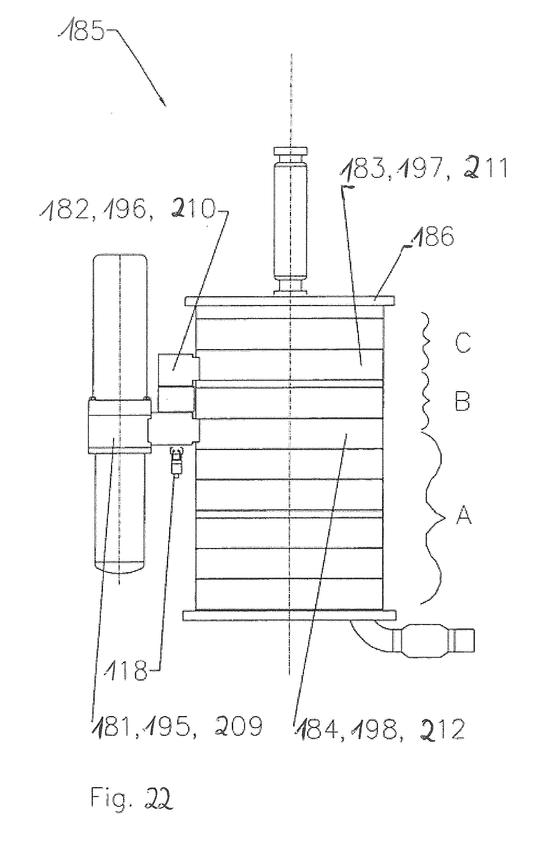

In figure 22, there is disclosed that the kit assembly of parts is mounted on an existing tempering machine 185 with a tempering column 186. An upper disc-shaped element of the column is substituted with the first disc-shaped element 183 of the kit and a lower disc-shaped element is substituted with the second disc-shaped element 184 of the kit. The main flow direction of the chocolate is from the top to the bottom of the column.

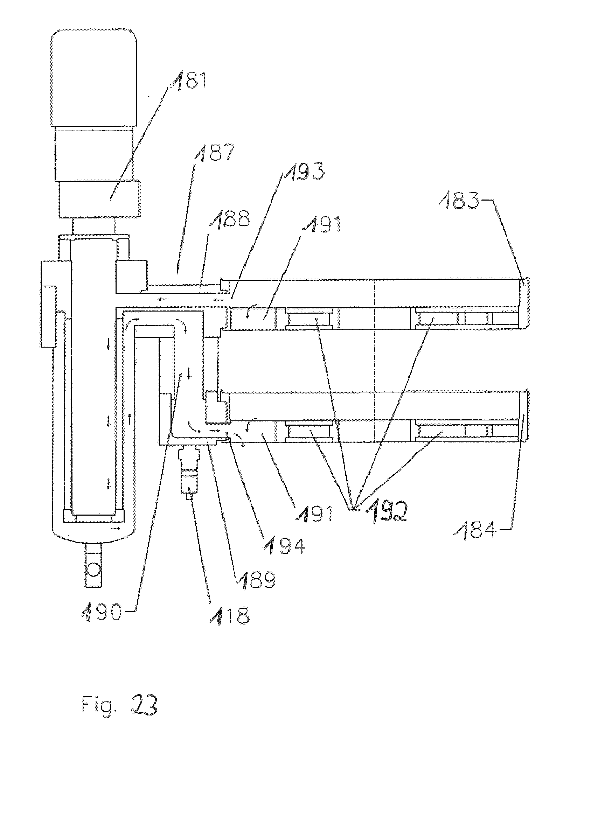

The simplest embodiment of the kit is disclosed in figure 23. The device part 187 of the kit comprises a first end 188 and a second end 189, seen in the flow direction of the chocolate, and a primary conduit 190 for the chocolate mass extending between the two ends. The arrows disclose the flow direction of the chocolate.

The arrangement of the device part 187 and the first element 183 and the second element 184 may be as in figure 22 where it is disclosed that the crystallisation stage B is exactly by-passed by the primary conduit 190. The arrangement may also be in other positions at the column depending on where the crystallisation stage B is arranged in the column for the particular tempering purpose. It is preferred that the crystallisation area is by-passed by the primary conduit of the device part.

The embodiment of the first and second disc-shaped elements 183, 184 are adapted to a tempering column of the type disclosed in figure 10, by which chocolate channels 191 are arranged alternately at the periphery and a closed water chamber 192 is arranged at the bottom of each disc-shaped element.

The disc-shaped elements 183, 184 are typically standard elements from the existing tempering column, which are modified with two extra openings 193, 194 in the periphery. The openings 193, 194 are connected with the first and the second end of the primary channel for by-pass of chocolate. The pump 181 regulates the by-passed amount of chocolate. The function and benefits in relation thereto is also described in relation to figure 14.

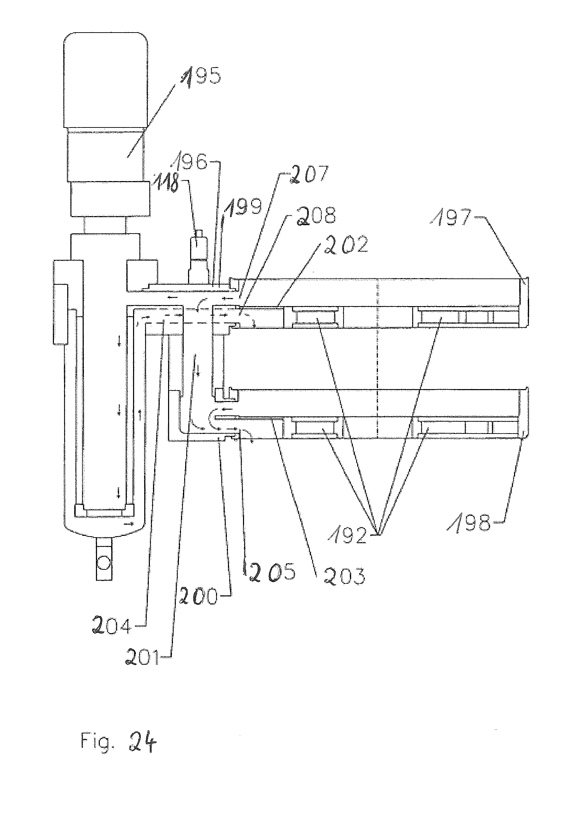

In figure 24, there is disclosed an even more advantageous embodiment of the kit assembly for a tempering column having alternate chocolate openings in the periphery of the elements. Seen from the outside the arrangement of the pump 195, the device part 196 and of the first and second disc-shaped elements 197, 198 are as disclosed in figure 22. The first and second elements have substituted two disc-shaped elements of the tempering column simply by lifting of the elements from each other and arranging the two new elements in the correct order before assembly.

As disclosed in figure 24, the device part has a first end 199 and a second end 200, seen in the flow direction of the chocolate, and a primary conduit 201 for chocolate mass extending between the two ends. The first end 199 is connected to the first disc-shaped element 197 and the second end 200 is connected to the second disc-shaped element 198, and so that the primary conduit 201 is by-passing the stage B for creating fat crystals.

The two disc-shaped elements 197, 198 are closed, so that chocolate flow therethrough is restricted or barred at a partition 202, 203 respectively. The first end of the device further comprises a second conduit 204 for the chocolate which by-passes the restriction 202 of the element and the second end of the device further comprises a third channel 205 for the chocolate which by-passes the restriction 203. The pump 195 then only needs to pump the smaller amount of chocolate which is flowing through the second channel 204, through the stage B in the column and through the third channel 205. The advantageous function-wise of this embodiment is as described in relation to figure 13.

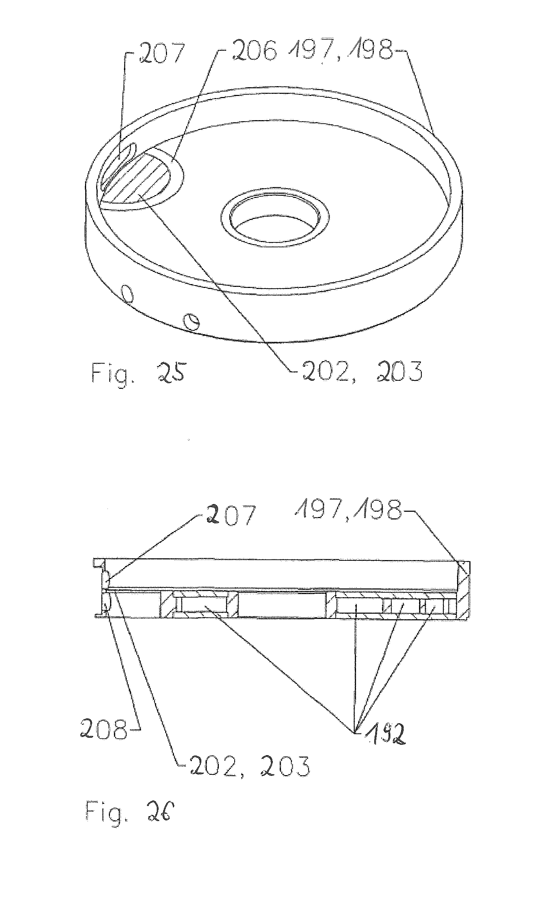

As disclosed more detailed in figure 25 and 26, the first and second elements 197, 198 are advantageously standard elements from a tempering column which are modified by having the peripherally arranged chocolate openings 206 being closed by a partitioning or plate 202, 203. Just above the plate 202, 203, there is arranged an opening 207 and just below the plate, there is arranged another opening 208.

The upper opening 207 of the first element 197 is connected to the primary channel 201, and the lower opening 208 of the first element 197 is connected to the second channel 204 for the chocolate.

The upper opening 207 of the second element is connected to the primary channel 201 and the second opening 208 of the second element 198 is connected to the third channel 205 in the device 196 as disclosed in figure 24.

In the following, there are described different further embodiments adapted to a tempering column having a central shaft and ring-shaped openings around the shaft for the flow of chocolate from element to element through the column.

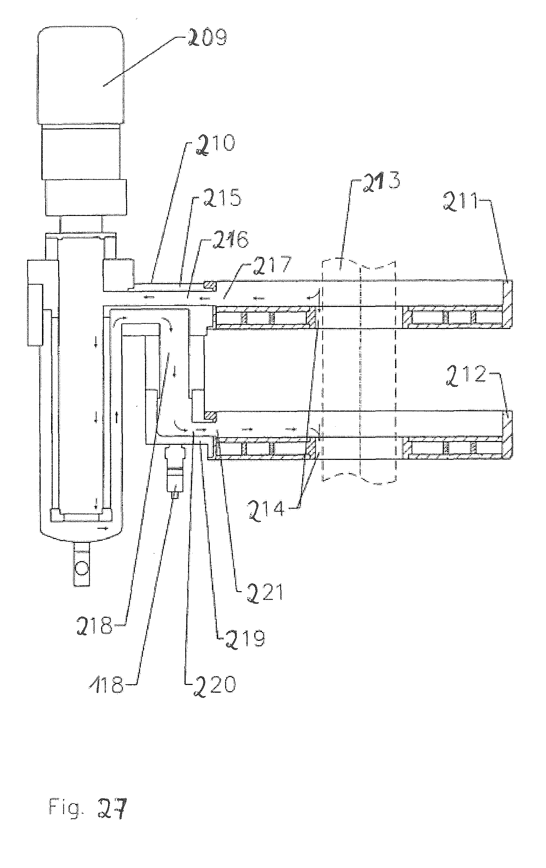

In the embodiment disclosed in figure 27, the pump 209, the device 210, and the first and the second element 211 and 212 can be arranged as disclosed in figure 22. The general flow of chocolate in column may be from the bottom to the top or vice versa. In relation to figure 27, the flow direction is from the top to the bottom.

The shaft 213 is disclosed with punctured line so that the ring-shaped openings 214 for the chocolate flow is visible. The device has a first end 215 connected to the first element 211 so that the inlet 216 of the primary channel 218 is connected to the opening 217 in the first element 211. The device also has a second end 219 connected to the second element 212 so that the outlet 220 of the primary channel 218 is connected to the opening 221 in the second element 212. The pump 209 then provides flow of chocolate in the primary channel that by-passes the crystallisation stage B of the tempering column with the advantages explained above in the description.

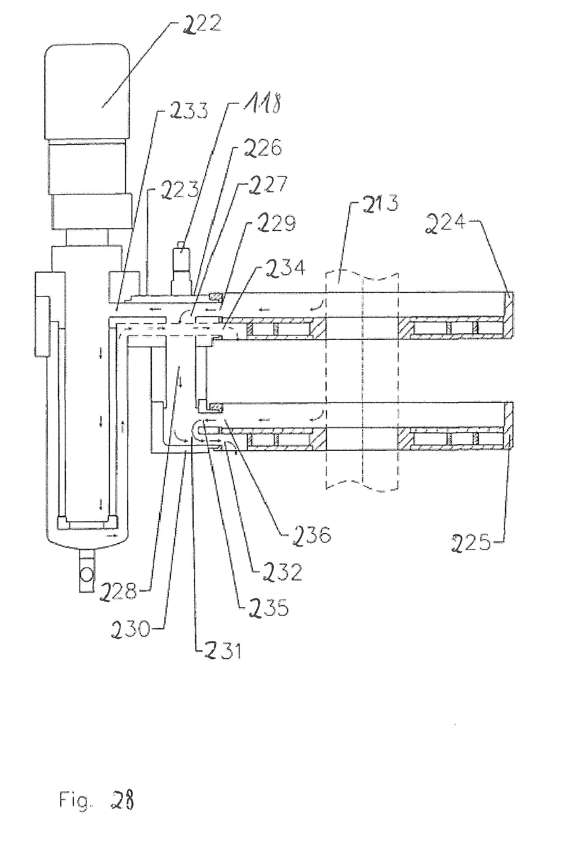

A further modified embodiment of the kit assembly adapted for tempering elements having ring-shaped chocolate openings around the shaft is disclosed in figure 28. The pump 222, the device 223 and the first and second elements 224, 225 are disclosed schematically as when having been mounted to a column so that the elements substitutes two of the standard elements of the column.
The device has a first end 226 connected to the first element 224 so that the inlet 227 of the primary channel 228 is connected to the upper opening 229 in the first element 224. The device also has a second end 230 connected to the second element 225 so that the outlet 231 of the primary channel 228 is connected to the lower opening 232 in the second element 225.

However, both the first and the second elements 224, 225 are closed for chocolate flow therethrough, typically by closing of the ring-shaped opening at the shaft 213. This could be done by a gasket, sealing or any simple manner. A second channel 233 for the chocolate is connected with the upper opening 229 in the first element 224 and runs to the pump 222 and therefrom to a lower opening 234 in the first element 224. A third channel 235 is connected with an upper opening 236 in the second element 225 and runs therefrom to be connected with the lower opening 232 of the second element. Thereby it is ensured, that only the minor flow of chocolate in the second channel 233, in the crystallisation stage B and in the third channel 235 is being pumped by the pump 222. This is the far most advantageous embodiment in its function-wise as already described in relation figures 9 and 15. It is easy and simple to adapt the standard elements so that the ring-shaped gaps are closed around the shaft of the element, and so that upper and lower openings for by-passing the chocolate flow are arranged in the elements.

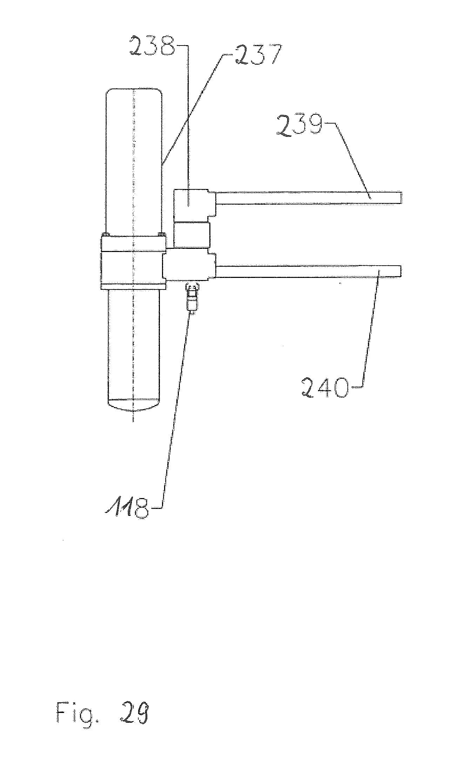

In figure 29, there is disclosed yet another expedient embodiment for upgrading a tempering column of the type having a central shaft an ring-shaped openings there around for flow of chocolate from element to element of the column. The kit assembly comprises a pump 237, a device 238 and a first and a second disc-shaped element 239 and 240.

Tempering columns are today often manufactured with massive discs arranged at each end of the crystallisation stage B with the purpose of making a temperature partition between the crystallisation stage and the neighbouring stages of the column. These discs could advantageously be utilised in relation to the present invention so that the sheaves are substituted with the first and the second element according to the inventive kit assembly.

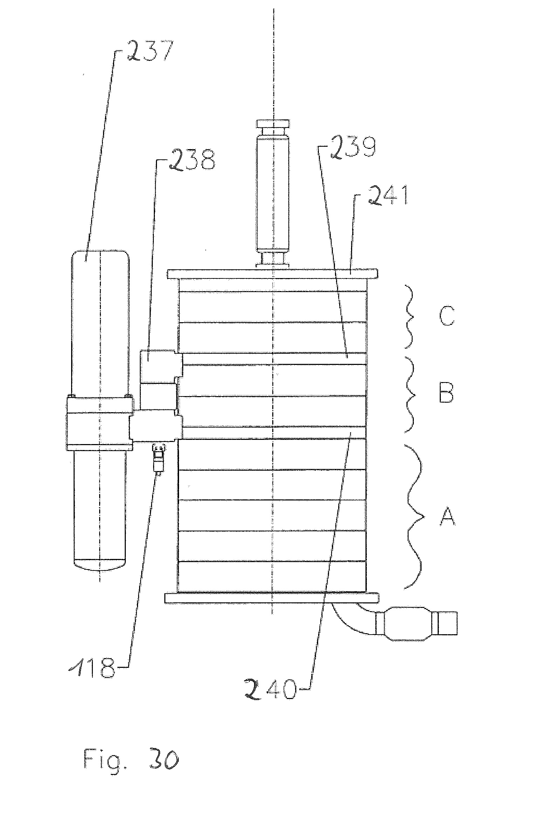

In figure 30, the first and second elements 239 and 240 have replaced such massive discs arranged at each end of the crystallisation stage B of a column 241.

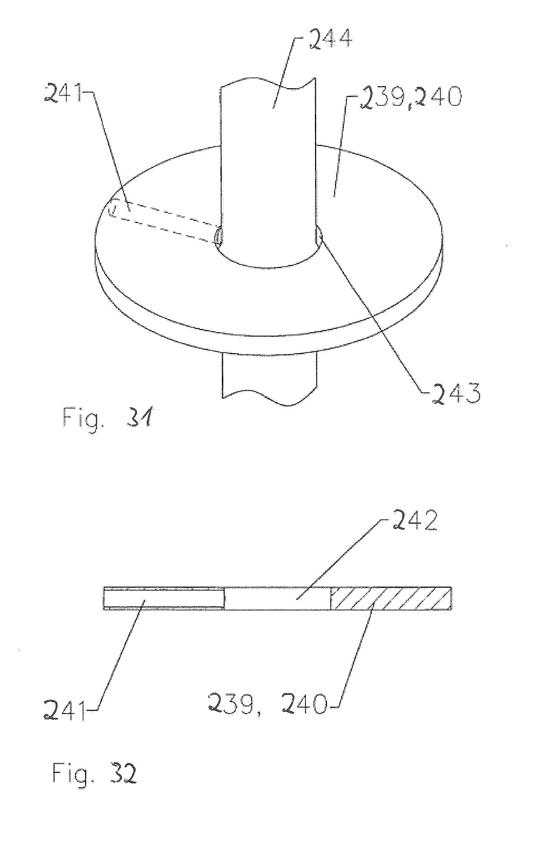

The disc-shaped elements 239 and 240 are disclosed in figures 31 and 32. The discs are typically solid and have a channel 241 extending from the outer periphery and to the central opening 242 in the discs. A ring-shaped gap 243 for the flow of chocolate is arranged around the shaft 244 of the tempering column 241.

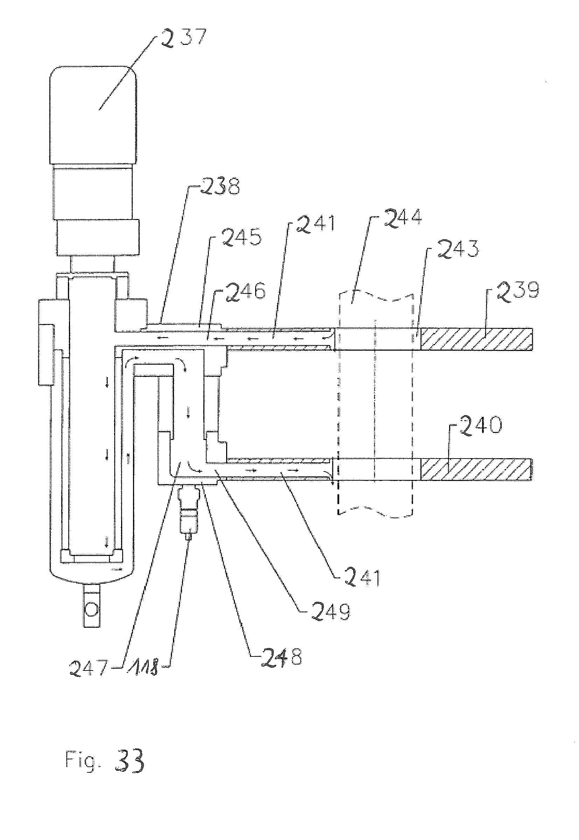

In figure 33, there is disclosed in more detail the embodiment of the kit assembly disclosed in figures 29-32. The device 238 has an upper end 245 with an inlet 246 to the primary chocolate channel 247. The inlet 246 is connected to the peripheral channel 241 of the first disc element 239. The device 238 also has a lower end 248 with an outlet that is connected to the channel 241 of the second disc element 240. By the action of the pump 237, some of the chocolate is branched off from the main flow of chocolate pumped through the ring-shaped openings 243 in the tempering column. The chocolate branched of is flowing through the channel 241 in the upper element 239 and via the inlet 246 into the pump 237 and therefrom to the primary channel 247 and via the outlet 249 into the channel 241 in the second lower element 240 and into the ring-shaped opening and into the column. The branched off flow of chocolate thereby by-passes the crystallisation stage B of the column. The basic process benefits are then as disclosed in relation to the embodiment of figure 13.

Common for the disclosed embodiments of the present invention is that they may all be implemented in an existing tempering column without altering the height of the column. As existing elements of the column are substituted with elements of some embodiments, the building height of the column is unchanged so that the length of the shaft among others is unchanged. Two existing elements of the column may also be altered so that they are configured according to the elements of the invention.

Specific embodiments of the present invention are configured as follows:
i) Method for continuous tempering of a crystal-containing and fat-containing chocolate mass that can be further crystallised, comprising the steps of
   - heating or maintaining the chocolate mass at a temperature at which it is liquid and pumpable;
   - dividing the chocolate mass into a first stream of mass and a second stream of mass, wherein the amount of the first stream of mass is preferably smaller than the amount of the second stream of mass;
   - cooling the chocolate mass of the first stream, so that further crystals are created in the first stream of mass, preferably during a period of more than 100 seconds;
   - maintaining the second stream of mass at conditions that essentially allow for the initial overall crystal content to be maintained;
   - re-combining the first stream of mass and the second stream of mass into one stream of mass.
ii) Method according to i), characterised in that the amount of the first stream of mass is between 5 % and 40 % of the amount of the final stream of mass.
iii) Method according to one of i) or ii), characterised in that crystals are created in the first stream of mass at a surface exhibiting a temperature above 19 °C.
iv) Method according to one of i) to iii), characterised in that the temperature of the second stream of mass is kept 4 - 7°C higher than the lowest achievable temperature of the first stream of mass, when it is being crystallised.
v) Method according to one of i) to iv), characterised in that the complete mass is cooled before it is divided, however being essentially free from fat crystals.
vi) Method according to one of i) to v), characterised in that the second stream of mass is cooled, however being essentially free from fat crystals.
vii) Use of an apparatus, comprising a branching means adapted for dividing the mass into a first stream of mass and a second stream of mass, cooling means adapted for cooling of the mass, so that fat crystals are created in the first stream of mass, and so that the second stream of mass is maintained at conditions that essentially allow for the initial overall crystal content to be maintained, and mixing means adapted for mixing the first stream of mass and the second stream of mass together into one final stream of mass, for continuous tempering of a crystal-containing and fat-containing chocolate mass that can be further crystallised, preferably according to a method according to any one of i) to vi).
viii) Use according to vii), characterised in that the branching means is a tube branch, of which a first tube is connected with a tempering device for crystallisation of the first stream of mass, and that a second tube of the tube branch being adapted for leading the second stream of mass to the mixing means.
ix) Use according to viii), characterised in that the second tube of the tube branch is connected with a plate heat exchanger.
x) Use according to viii) or ix), characterised in that a cooling device is arranged for cooling the mass before it flow through the branching device.
xi) Use according to one of vii) to x), characterised in that the cooling means comprises the cooling section and the crystallisation section of a tempering column, and that the branching means comprise a channel connected with its inlet and outlet to the side of the tempering column, which channel is adapted for by-passing the second stream of mass outside the crystallisation section.
xii) Use according to one of vii) to xii), characterised in that the mixing means are part of the final sections of the tempering column.

Further specific embodiments of the present invention are configured as follows:
xiii) Use of an apparatus, in particular according to one of vii) to xii), comprising a cooling stage, a crystallisation stage and a mixing stage arranged as a tempering column as well as pump means for chocolate mass, wherein a primary conduit for chocolate mass is arranged by-passing the crystallisation stage, for continuous tempering of a crystal-containing and fat-containing chocolate mass that can be further crystallised, preferably according to a method according to one of i) to vi).
xiv) Use according to xiii), characterised in that the apparatus is barred for chocolate flow between the cooling stage and the crystallisation stage, and that a second conduit for chocolate mass is arranged adapted for by-passing mass from the cooling stage to the beginning of the crystallisation stage.
xv) Use according to one of xiii) or xiv), characterised in that the apparatus is barred for chocolate flow between the crystallisation stage and the mixing stage, and that a third conduit for chocolate mass is arranged adapted for by-passing mass from the end of the crystallisation stage to the mixing stage.
xvi) Use according to one of xiii) to xv), characterised in that the primary conduit arranged by-passing the crystallisation stage for creating fat crystals is adapted to by-pass more than half of the total amount of mass entering the apparatus.
xvii) Use according to xv), characterised in that the primary conduit is adapted to by-pass between 65 % and 95 % of the total amount of mass entering the apparatus.
xviii) Use according to one of xv) to xvii), characterised in that an inlet of the primary conduit is connected to the end of the cooling stage.
xix) Use according to one of xv) to xviii), characterised in that an outlet of the primary conduit is connected to the beginning of the mixing stage.
xx) Use of an apparatus according to one of xiii) to xix), characterised in that the second conduit branches off from the primary conduit.
xxi) Use according to xv) to xx), characterised in that the third conduit branches into the primary conduit.
xxii) Use according to one of xiii) to xxi), characterised in that a pump is arranged adapted to pump the chocolate flow through the crystallisation stage.
xxiii) Use according to xxii), characterised in that the pump is arranged in the second conduit.
xxiv) Use according to xxii), characterised in that the pump is arranged in the third conduit.
xxv) Use according to one of xiii) to xxiv), characterised in that a first chocolate temperature measurement device is arranged at an inlet of the primary conduit, which temperature measurement device is wired to an electronic control device, which is adapted to control the cooling amount in the cooling stage in response to received values of the chocolate temperature.
xxvi) Use according to xxv), characterised in that a second chocolate temperature measurement device is arranged in the third conduit, which temperature measurement device is wired to an electronic control device, which is adapted to control the cooling amount in the crystallisation stage in response to received values of the chocolate temperature.

Yet further specific embodiments of the present invention are configured as follows:
xxvii) Use of a kit assembly of parts adapted for modifying an apparatus for continuous tempering of crystal-containing chocolate mass, in particular in a method according to one of i) to vi), comprising a cooling stage, a crystallisation stage and a mixing stage arranged as a tempering column of stacked elements each having a water chamber and a chocolate compartment, as well as comprising pump means adapted for pumping the chocolate mass through the column from the bottom towards the top of the column or vice versa thereby providing a flow direction for the chocolate, characterised in that the kit comprises a device part having a first end and a second end, seen in the flow direction of the chocolate, and a primary conduit for chocolate mass extending between the two ends, as well as a pump adapted to pump the chocolate through the conduit which kit further comprises a first and a second disc-shaped element adapted to substitute two disc-shaped elements of the tempering column, so that the first end is connected to the first disc-shaped element and the second end is connected to the second disc-shaped element, and so that the primary conduit is by-passing the stage for creating crystals.
xxviii) Use of a kit assembly of parts adapted for modifying an apparatus for continuous tempering of crystal-containing chocolate mass, in particular in a method according to one of i) to vi), comprising a cooling stage, a crystallisation stage and a mixing stage arranged as a tempering column of stacked elements each having a water chamber and a chocolate compartment, as well as comprising pump means adapted for pumping the chocolate mass through the column from the bottom towards the top of the column or vice versa thereby providing a flow direction for the chocolate, characterised in that the kit comprises a device part having a first end and a second end, seen in the flow direction of the chocolate, and a primary conduit for chocolate mass extending between the two ends, which kit further comprises a first and a second disc-shaped element adapted to substitute two disc-shaped elements of the tempering column, so that the first end is connected to the first disc-shaped element and the second end is connected to the second disc-shaped element, and so that the primary conduit is by-passing the stage for creating crystals, that the first disc-shaped element is closed so that chocolate flow therethrough is barred, and that the first end of the device further comprises a second conduit for the chocolate which by-passes the restriction of the element.
xxix) Use according to xxviii), characterised in that the second disc-shaped element is closed so that chocolate flow therethrough is barred, and that the second end of the device further comprises a third conduit for the chocolate which by-passes the restriction of the element.
xxx) Use according to xxviii) or xxix), characterised in comprising a pump adapted to pump the chocolate through the second or through the third conduit.
xxxi) Use of a kit assembly of parts adapted for modifying an apparatus for continuous tempering of crystal-containing chocolate mass, in particular in a method according to one of i) to vi), comprising a cooling stage, a crystallisation stage and a mixing stage arranged as a tempering column of stacked elements each having a water chamber and a chocolate compartment, openings for the chocolate arranged as ring-shaped openings through which the shaft of the column extends, as well as comprising pump means adapted for pumping the chocolate mass through the column from the bottom towards the top of the column or vice versa thereby providing a flow direction for the chocolate, characterised in that the kit comprises a device part having a first end and a second end, seen in the flow direction of the chocolate, and a primary conduit for chocolate mass extending between the two ends, as well as a pump adapted to pump the chocolate through the conduit, which kit further comprises a first and a second disc-shaped element each having a chocolate channel extending between the periphery and the central ring-shaped opening, and each being adapted to be inserted between two neighbouring disc-shaped elements of the tempering column, so that the first end of the device is connected to the first disc-shaped element and the second end is connected to the second disc-shaped element, and so that the primary conduit is by-passing the stage for creating crystals being connected with the channels of the two disc-shaped elements.

Yet further specific embodiments of the present invention are configured as follows:
xxxii) Method, in particular method according to one of i) to vi), for continuous tempering of a crystal-containing, fat-containing chocolate mass which can be further crystallised, which has been heated, so that it is liquid, pumpable and free from crystals, that the mass is divided into a first stream of mass and a second stream of mass, the amount of the first stream of mass is smaller than the amount of the second stream of mass, which mass is cooled, so that crystals are created in the first stream of mass during a period of more than 100 seconds, and so that the second stream of mass is essentially free from fat crystals, where after the first stream of mass and the second stream of mass is mixed together into one final stream of mass.
xxxiii) Method according to xxxii), characterised in that the temperature of the second stream of mass is kept essentially constant and 4 - 7°C higher than the lowest achievable temperature of the first stream of mass, when it is being crystallised.
xxxiv) Method according to one of xxxii) or xxxiii), characterised in that the crystals are created in the first stream of mass at a surface temperatures above 19 °C.
xxxv) Method according to one of xxxii) to xxxiv), characterised in that the amount of the first stream of mass is between 5 % and 40 % of the amount of the final stream of mass.

## Claims

1. Method for continuous tempering of a crystal-containing and fat-containing chocolate mass that can be further crystallised, comprising the steps of
- heating or maintaining the chocolate mass at a temperature at which it is liquid and pumpable;
- dividing the chocolate mass into a first stream of mass and a second stream of mass, wherein the amount of the first stream of mass preferably is smaller than the amount of the second stream of mass;
- cooling the chocolate mass of the first stream, so that further crystals are created in the first stream of mass, preferably during a period of more than 100 seconds;
- maintaining the second stream of mass at conditions that essentially allow for the initial overall crystal content to be maintained;
- re-combining the first stream of mass and the second stream of mass into one stream of mass.

2. Method according to claim 1, **characterised in that** the amount of the first stream of mass is between 5 % and 40 % of the amount of the final stream of mass.

3. Method according to any one of claims 1 or 2, **characterised in that** crystals are created in the first stream of mass at a surface exhibiting a temperature above 19°C.

4. Method according to any one of claims 1 to 3, **characterised in that** the temperature of the second stream of mass is kept 4 - 7°C higher than the lowest achievable temperature of the first stream of mass, when it is being crystallised.

5. Method according to any one of claims 1 to 4, **characterised in that** the complete mass is cooled before it is divided, however being essentially free from fat crystals.

6. Method according to any one of claims 1 to 5, **characterised in that** the second stream of mass is cooled, however being essentially free from fat crystals.

7. Use of an apparatus (1), comprising a branching means (5,22) adapted for dividing the mass into a first stream of mass and a second stream of mass, cooling means (8,11,21,24,39,40,46) adapted for cooling of the mass, so that fat crystals are created in the first stream of mass, and so that the second stream of mass is maintained at conditions that essentially allow for the initial overall crystal content to be maintained, and mixing means (14,26,41) adapted for mixing the first stream of mass and the second stream of mass together into one final stream of mass, for continuous tempering of a crystal-containing and fat-containing chocolate mass that can be further crystallised, preferably according to a method according to any one of claims 1 to 6.

8. Use according to claim 7, **characterised in that** the branching means is a tube branch (5,22), of which a first tube (9,23) is connected with a tempering device (11,24) for crystallisation of the first stream of mass, and that a second tube (6,25) of the tube branch (5,22) being adapted for leading the second stream of mass to the mixing means (14,26).

9. Use according to claim 8, **characterised in that** the second tube (6) of the tube branch (5) is connected with a plate heat exchanger (8).

10. Use according to any one of claims 7 to 9, **characterised in that** a cooling device (21) is arranged for cooling the mass before it flows through the branching device (22).

11. Use according to any one of claims 6 to 10, **characterised in that** the cooling means comprises the cooling section (39) and the crystallisation section (40) of a tempering column (28), and that the branching means comprise a channel (43) connected with its inlet (42) and outlet (45) to the side of the tempering column, which channel (43) is adapted for by-passing the second stream of mass outside the crystallisation section (40).

12. Use according to any one of claims 7 to 11, **characterised in that** the mixing means are part of the final sections (41) of the tempering column (28).

13. Use of an apparatus (1,36,46,51,56,60,66,72,74), in particular according to any one of claims 7 to 12, comprising a cooling stage (A), a crystallisation stage (B) and a mixing stage (C) arranged as a tempering column (2) as well as a pump means (5) for chocolate mass, wherein a primary conduit (8,9,43,49,53,58,62,70,76) for chocolate mass is arranged by-passing the crystallisation stage (B), for continuous tempering of a crystal-containing and fat-containing chocolate mass that can be further crystallised, preferably according to a method according to any one of claims 1 to 6.

14. Use according to claim 13, **characterised in that** the apparatus (1,36,56) is barred for chocolate flow between the cooling stage (A) and the crystallisation stage (B), and that a second conduit (10,44,59) for chocolate mass is arranged adapted for by-passing mass from the cooling stage (A) to the beginning of the crystallisation stage (B).

15. Use according to any one of claims 13 or 14, **characterised in that** the apparatus (1,36,51) is barred for chocolate flow between the crystallisation stage (B) and the mixing stage (C), and that a third conduit (11,54) for chocolate mass is arranged adapted for by-passing mass from the end of the crystallisation stage (B) to the mixing stage (C).
